# EUROPÄISCHE PATENTSCHRIFT

(11) **EP 2 709 439 B1**
(45) Veröffentlichungstag und Bekanntmachung des Hinweises auf die Patenterteilung: **26.07.2017**
(21) Anmeldenummer: 11722762.9
(22) Anmeldetag: 19.05.2011
(51) Int. Cl.: A01G 27/04

(54) **WASSERTRANSPORTLEITUNG ZUR KAPILLARBEWÄSSERUNG IN EINER PFLANZENBEWÄSSERUNGSEINRICHTUNG**
WATER TRANSPORT LINE FOR CAPILLARY WATERING IN A PLANT WATERING SYSTEM
CONDUITE D'EAU POUR L'ARROSAGE PAR CAPILLARITÉ DANS UN SYSTÈME D'ARROSAGE DE PLANTES

(43) Veröffentlichungstag der Anmeldung: 26.03.2014
(60) Teilanmeldung: 17175133.2
(73) Patentinhaber: HUSQVARNA AB, 561 82 Huskvarna (SE)
(72) Erfinder: CLAUS, Ralf, 89171 Illerkirchberg (DE); RENNER, Thomas, 89079 Ulm (DE)
(74) Vertreter: Finkele, Rolf
(86) Internationale Anmeldenummer: PCT/EP2011/058150
(87) Internationale Veröffentlichungsnummer: WO 2012/155979

(56) Entgegenhaltungen:
- WO-A1-2009/132380
- DE-B- 1 064 281
- GB-A- 1 106 768
- US-A- 5 352 253

## Beschreibung

Die Erfindung betrifft eine Wassertransportleitung zur Kapillarbewässerung in einer Pflanzenbewässerungseinrichtung, insbesondere nach Art einer Topfbewässerung.

Für die Bewässerung von Topfpflanzen sind Bewässerungseinrichtungen bekannt, bei welchen wenigstens ein Strang aus faserigem Material als Wassertransportleitung zwischen einem Vorratsbehälter und einem die zu bewässernde Pflanze umgebenden Erdsubstrat verläuft. Durch den Kapillareffekt innerhalb des faserigen Materials wird mit geringer Fließrate Wasser aus dem Vorratsbehälter über den Strang aus faserigem Material zu dem Erdsubstrat transportiert, insbesondere zumindest abschnittsweise auch entgegen der Schwerkraft. Als faseriges Material dienen beispielsweise Wollfäden oder andere organische Fasern, aber auch Kunststofffasern sind gebräuchlich. In der US 5 352 253 A ist eine Wassertransportleitung in Form eines eine Schlinge bildenden Textilbandes beschrieben, welches in Öffnungen im unteren Bereich eines Topfes eingesteckt wird. Der Strang aus faserigem Material kann von einem wasserdichten Schlauch umschlossen sein, um eine Verdunstung von Wasser aus dem faserigen Material zwischen dem Vorratsbehälter und dem Bewässerungsziel zu vermeiden. Eine Wassertransportleitung mit einem von einem Schlauch umgebenen Docht ist in der DE 1 064 281 B beschrieben. In der GB 1 106 768 A wird vorgeschlagen, die Wassertransportleitung an die Form von Blumentrögen angepasst, seitlich ausgedehnt auszuführen, um gleichzeitig mehrere, in Reihe angeordnete Pflanzen bewässern zu können.

Solche Wassertransportleitungen erweisen sich als nicht befriedigend hinsichtlich einer zuverlässigen und gleichmäßigen Bewässerung.

Der vorliegenden Erfindung liegt die Aufgabe zugrunde, eine für Bewässerungseinrichtungen nach Art der Topfbewässerung geeignete Wassertransportleitung mit einem Strang aus faserigem Material in einer wasserdichten Hülle anzugeben.

Die Erfindung ist im unabhängigen Anspruch beschrieben. Die abhängigen Ansprüche enthalten vorteilhafte Ausgestaltungen und Weiterbildungen der Erfindung.

Die Kombination eines faserigen Materials in Form eines flachen Bandes mit einer Hülle mit flachem Innenraum erweist sich gegenüber den gebräuchlichen umhüllten Wassertransportleitungen mit rundem Querschnitt des Innenraums überraschenderweise als hinsichtlich einer gleichmäßigen Bewässerung deutlich überlegen, so dass trotz des höheren Aufwands für eine flache Hülle und die Einführung eines Bandes in eine solche flache Hülle eine derartige Kombination in einer Wassertransportleitung insgesamt von Vorteil ist. Insbesondere ist die Wassertransportfähigkeit der Wassertransportleitung weitgehend unabhängig von Krümmungen im Leitungsverlauf, welche insbesondere im Bereich der Überwindung eines Topfrandes mit kleinem Krümmungsradius auftreten können.

Es zeigt sich ferner, dass bei unter leichter elastischer Verspannung an der Innenwand der Hülle anliegendem faserigem Material ein dem Wassertransport förderlicher Grenzeffekt zwischen faserigem Material und Hülle auftritt. Durch die flache Form sowohl des Bandes als auch des Innenraums der Hülle ergibt sich ein gegenüber runden Querschnitten günstig hohes Verhältnis von Grenzfläche Fasermaterial-Hülle zu Querschnittsfläche des Innenraums bzw. des Faserstrangs.

Insbesondere auch hinsichtlich der relativ großen Grenzfläche zwischen dem Band aus dem faserigen Material und der Hülle ist es von besonderem Vorteil, wenn die Hülle aus intransparentem Material besteht. Hierdurch kann die Gefahr von Algenwachstum stark vermindert werden. Zur Verminderung des Algenwachstums kann ferner vorgesehen sein, dass die Wassertransportleitung algizides Material enthält, vorzugsweise in Form von in den Vliesstoff des faserigen Materials integrierten Kupferfäden oder Silberfäden.

An einem im Betrieb der Wassertransportleitung in Wasser abgebendem Kontakt mit einem Pflanzsubstrat z. B. einer Topfpflanze in Verbindung stehenden Ende der Wassertransportleitung kann in bevorzugter Ausführung ein in sich formstabiler Erdspieß angeordnet oder anordenbar sein, welcher einem nicht umhüllten Endbereich des faserigen Materials einen definierten Verlauf im Pflanzensubstrat verleiht. Die Hülle reicht vorteilhafterweise bis zu dem Erdspieß und ein über die Hülle in der Länge um ein Mehrfaches der Breite des Bandes hinaus ragender Endbereich des flexiblen Bandes verläuft auf einer der Hülle abgewandten Seite des Erdspießes und ist an diesem mechanisch fixiert. Die Hülle und das Band können eine mit dem Erdspieß fest verbundene Verkaufs- und Gebrauchseinheit bilden, aber auch als mit dem Erdspieß durch einen Benutzer auswechselbar verbindbare kleinere Einheit als Verbrauchsmaterial ausgeführt sein. Der Betrieb der Wassertransportleitung erfolgt bei bestehender Verbindung des Bandes mit dem Erdspieß, d. h. der Erdspieß verbleibt für den Betrieb zusammen mit dem unverhüllten Ende des Bandes im Pflanzsubstrat.

In anderer vorteilhafter Ausführung kann das faserige Material an einem im Betrieb dem Wasservorratsbehälter einer Pflanzenbewässerungseinrichtung abgewandten Ende flächig aufgeweitet sein mit Querabmessungen eines Mehrfachen der Breite des Bandes. Der flächig aufgeweitete Bereich kann vorteilhafterweise als Keimsubstrat, z. B. für die erdfreie Auskeimung von Sojasprossen, Getreidesprossen oder die Anzucht von Kresse oder als flächige Unterlage unter ein separates Keimsubstrat dienen.

Die Erfindung ist nachfolgend anhand bevorzugter Ausführungsbeispiele unter Bezugnahme auf die Abbildungen noch eingehend veranschaulicht. Dabei zeigt:
- Fig. 1: eine bandförmige Wassertransportleitung,
- Fig. 2: einen mit einer Wassertransportleitung verbundenen Erdspieß,
- Fig. 3: eine Wassertransportleitung mit Keimsubstratfläche.

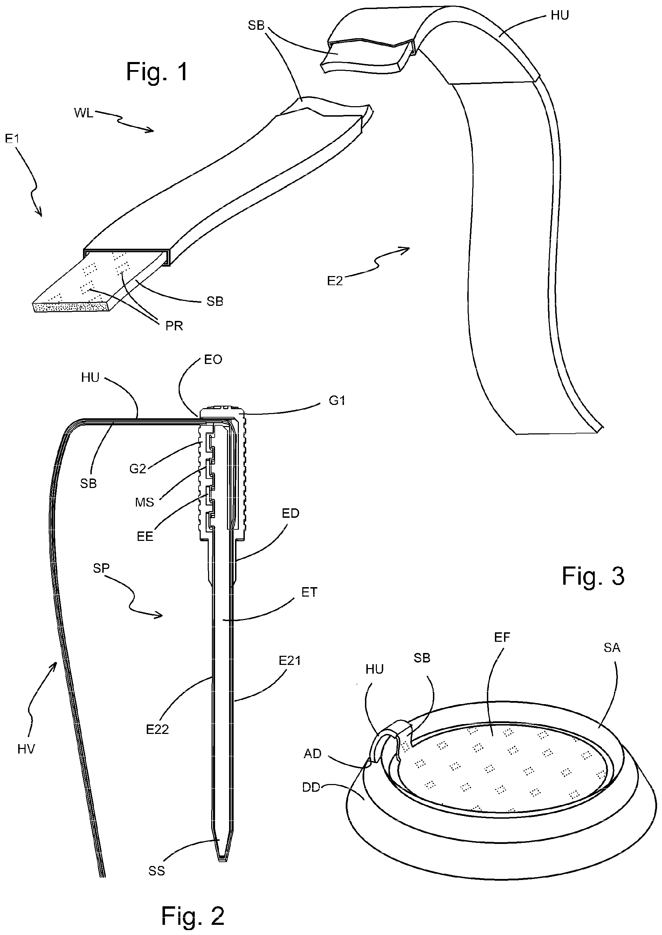

Fig. 1 zeigt ausschnittsweise eine bevorzugte Ausführung einer Wassertransportleitung WL mit einem faserigen Material für einen Wassertransport zwischen einem ersten Ende E1 und einem zweiten Ende E2 mittels Kapillareffekt über ein faseriges Material.

Das faserige Material liege in Form eines flachen Bandes SB vor, dessen Breite wesentlich größer ist als die Dicke und insbesondere wenigstens das 5-fache der Dicke des Bandes beträgt. Das faserige Material ist in bevorzugter Ausführung durch einen Vliesstoff aus Kunststoff-Mikrofilamenten gegeben, wie er beispielsweise in der DE 69725051 T2 beschrieben ist. Der Vliesstoff weist auf wenigstens einer Seite über die Bandfläche hinausstehende Reliefstrukturen, insbesondere in Form von Prägestrukturen PR auf. Die Erzeugung solcher Prägestrukturen ist aus dem Stand der Technik bei derartigen Vliesstoffen prinzipiell bekannt.

Das Band SB aus dem faserigen Material ist über einen Teil seiner Länge, welcher auch den überwiegenden Teil darstellen kann, durch eine wasserundurchlässige Hülle HU umgeben. Die Hülle HU kann insbesondere durch einen Kunststoffschlauch gebildet sein. Vorzugsweise ist die Hülle HU für Licht nicht transparent, um Algenbildung innerhalb der Hülle HU zu vermeiden. Die zwischen den beiden Enden E1 und E2 durchgehende Wassertransportleitung ist in Fig. 1 lediglich mit zwei Endabschnitten dargestellt, zwischen welchen in Fig. 1 lediglich der Anschaulichkeit halber die Hülle HU und das Band SB aus dem faserigen Material aufgetrennt dargestellt sind. Im Realfall gehen das Band SB und die Hülle HU zwischen den beiden Endabschnitten ununterbrochen durch.

Die Hülle HU ist vorteilhafterweise durch einen im Ruhezustand flachen Schlauch gebildet, welcher einen den Abmessungen des Bandes SB entsprechenden flachen Innenraum begrenzt. Vorteilhafterweise sind Querschnitt des Bandes SB und Querschnitt der Hülle HU so aufeinander abgestimmt, dass das Band SB unter leichter Vorspannung in zumindest der Richtung senkrecht zur Bandfläche an den Innenwänden der Hülle HU anliegt. Es zeigt sich, dass ein solches flächiges Anliegen des Bandes SB an den Innenwänden der Hülle HU unter leichter Vorspannung den Wassertransport durch den Kapillareffekt unterstützt. Hierdurch ist die flache Ausführung des Bandes SB und der Hülle HU gegenüber einer gebräuchlichen kreisrunden Form eines Saugdochtes in einem runden Schlauch von besonderem Vorteil, da durch die flache Form im Querschnitt ein größeres Verhältnis der Grenzschichten zwischen Band SB und Innenwand der Hülle HU relativ zur Querschnittsfläche des Bandes gegeben ist.

An den entgegen gesetzten Enden E1 und E2 des Bandes SB ragt das faserige Material über die Hülle in Längsrichtung des Bandes hinaus, um Wasser aus einem Wasservorratsbehälter aufzunehmen bzw. mittels Kapillareffekt entlang der Wassertransportleitung transportiertes Wasser an ein Erdsubstrat oder eine Pflanze abzugeben. Dabei kann der Überstand an dem dem Wasservorratsbehälter zugewandten und in diesem in Wasser eintauchenden Ende relativ kurz gehalten werden, wogegen der frei liegende Abschnitt des Bandes SB an dem der Pflanze bzw. einem Erdsubstrat zuweisenden Ende, welches in diesem Fall das Ende E2 der Wassertransportleitung sei, durch eine größere Länge des von der Hülle HU freien Bandes SB eine große Kontaktfläche zur Wasserabgabe aufweist. Das Band SB aus flexiblem Material kann auch mehrlagig aus übereinander liegenden Streifen von Vliesstoff bestehen. Die effektive Kontaktfläche ist durch die Breite des Bandes SB und die Länge dessen von der Hülle freien Endes E2 bestimmt. Die Länge des frei liegenden Abschnitts des zweiten Endes E2 beträgt vorteilhafterweise ein Mehrfaches der Breite des Bandes.

Fig. 2 zeigt eine vorteilhafte Ausführung einer Wassertransportleitung der in Fig. 1 dargestellten Art in Verbindung mit einem Erdspieß SP. Der Erdspieß SP umfasst ein Griffteil, welches im skizzierten Beispiel aus zwei Gehäuseteilen G1 und G2 besteht, und ein spießförmiges Einsteckteil ET, welches mit dem Griffteil verbunden ist und an seinem dem Griffteil abgewandten Ende vorzugsweise in Form einer Spitze SS verjüngt zuläuft. Das Einsteckteil ET ist über ein zwischen den Gehäuseteilen G1 und G2 eingeschlossenes Kernteil KT verlängert und auf diese Weise in seiner Lage relativ zu dem Griffteil stabilisiert. Der formstabile Erdspieß SP ist zum Einstecken des Einsteckteils ET in ein Erdsubstrat eines Pflanzgefäßes vorgesehen und mit hierfür ausreichender Festigkeit ausgeführt. Der Erdspieß SP besteht vorzugsweise aus Kunststoff und kann in bevorzugter Ausführungsform durch einen einteiligen Kunststoffkörper mit mehreren über Filmscharniere gelenkig miteinander verbunden Teilen gebildet sein.

Die Wassertransportleitung ist in Wassertransportrichtung von dem ersten Ende E1 her mit von der Hülle HU umschlossenem Band SB ausgeführt und kann insbesondere einen ansteigenden Abschnitt HV aufweisen, in welchem Wasser entgegen der Schwerkraft durch den Kapillareffekt nach oben befördert wird. Die Hülle HU reicht vorteilhafterweise bis zu einer Einführöffnung EO des Griffteils und durch diese Einführöffnung EO hindurch bis in das Griffteil, so dass auf der gesamten Leitungslänge zwischen dem in einen Wasservorratsbehälter ragenden Ende E1 des Bandes SB bis zu dem Erdspieß das Band SB aus faserigem Material vollständig von der Hülle HU umschlossen ist und eine Verdunstung von Wasser auf dem Transportweg von dem Ende E1 zum Griffteil vermieden ist.

In dem Erdspieß SP ist das Band SB durch das Griffteil hindurch und entlang des Einsteckteils ET mit einem Abschnitt E21 in Richtung der Spitze SS des Einsteckteils geführt. An oder bei der Spitze SS ist das Band SB umgelenkt und mit einem Abschnitt E22 zu dem Griffteil zurück geführt und in dem Griffteil mit einem Endbereich EE in einer in dem Griffteil ausgebildeten Mäanderstruktur festgeklemmt. Die Abgabe von Wasser aus dem Band SB in ein das Einsteckteil ET in Betriebsstellung umgebendes Erdsubstrat erfolgt über die nicht umhüllten Abschnitte E21, E22 des Bandes SB, wobei durch die Aufeinanderfolge in Wassertransportrichtung und dem Abschnitt E21 eine stärkere Wasserabgabe an das Erdsubstrat erfolgt als in dem Abschnitt E22. Von dem Griffteil in Richtung der Spitze SS ragende Fortsätze ED decken das von der Hülle freie Band SB nahe bei dem Griffteil ab und sind zumindest teilweise in das Erdsubstrat einsteckbar, so dass eine Verdunstung direkt aus dem Band SB in die Umgebungsluft oder aus einer oberflächennahen Schicht des Erdsubstrats vermindert ist. Die in Fig. 1 dargestellten Reliefstrukturen PR erweisen sich in den Abschnitten E21, E22 als besonders vorteilhaft für die Abgabe von Wasser aus dem Band SB an das das Einsteckteil ET umgebende Erdsubstrat.

Fig. 3 zeigt eine vorteilhafte andere Ausgestaltung einer Wassertransportleitung. Hierbei sei unter einer haubenförmigen Abdeckung DB ein in Fig. 3 nicht sichtbarer Wasservorratsbehälter angenommen. Die Wassertransportleitung führt von dem Wasservorratsbehälter durch eine Aussparung AD in der Abdeckung in umhüllter Form über den Rand einer auf der Abdeckung abgestellten Schale SA. Das dem Wasservorratsbehälter abgewandte Ende der Wassertransportleitung, welche innerhalb der Hülle HU wieder in Form eines Bandes SB angenommen sei, ist nach dem Band SB großflächig in Form einer flächigen Aufweitung EF erweitert. Die flächige Aufweitung EF kann vorteilhafterweise als Keimsubstrat für beispielsweise Sojasprossen, Kresse oder dergleichen dienen. Die flächige Aufweitung EF kann auch durch ein gesondertes Keimsubstrat, welches dann durch die flächige Aufweitung EF von unten mit Wasser versorgt wird, abgedeckt sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Wassertransportleitung, welche zur Kapillarbewässerung in einer Pflanzenbewässerungseinrichtung ausgebildet ist und einen flexiblen Strang aus faserigem Material als Wasser auch entgegen der Schwerkraft transportierendes Mittel enthält,
wobei der Strang aus faserigem Material zumindest über einen Teil seiner Länge von einer wasserdichten Hülle umgeben ist, **dadurch gekennzeichnet,**
**dass** der Strang aus faserigem Material als flaches Band (SB) ausgeführt ist und die Hülle (HU) einen im Querschnitt flachen Innenraum begrenzt, und dass das Band (SB) an wenigstens einer seiner beiden gegenüber liegenden Flächen gegen die Fläche erhabene Prägestrukturen (PR) aufweist.

2. Wassertransportleitung nach Anspruch 1, **dadurch gekennzeichnet, dass** der Innenraum der Hülle (HU) in Richtung seiner im Querschnitt kürzesten Ausdehnung im wesentlichen vollständig durch das faserige Material (SB) ausgefüllt ist.

3. Wassertransportleitung nach Anspruch 2, **dadurch gekennzeichnet, dass** das faserige Material (SB) unter elastischer Verformung der Hülle (HU) und/oder des faserigen Materials an der Innenwand der Hülle anliegt.

4. Wassertransportleitung nach einem der Ansprüche 1 bis 3, **dadurch gekennzeichnet, dass** die Hülle (HU) aus intransparentem Material besteht.

5. Wassertransportleitung nach einem der Ansprüche 1 bis 4, **dadurch gekennzeichnet, dass** das faserige Material (SB) als Vliesstoff ausgebildet ist.

6. Wassertransportleitung nach einem der Ansprüche 1 bis 5, **dadurch gekennzeichnet, dass** das Band (SB) an wenigstens einem Ende (E2) über eine ein Mehrfaches, insbesondere wenigstens ein 5-faches der Breite des Bandes betragende Länge über die Hülle (HU) hinausragt.

7. Wassertransportleitung nach einem der Ansprüche 1 bis 6, **dadurch gekennzeichnet, dass** an einem Ende der Hülle ein formstabiler Erdspieß (SP) angeordnet ist.

8. Wassertransportleitung nach Anspruch 7, **dadurch gekennzeichnet, dass** das flache Band (E21, E22) an einer der Hülle abgewandten Seite des Erdspießes (SP) unverhüllt frei liegt.

9. Wassertransportleitung nach einem der Ansprüche 1 bis 6, **dadurch gekennzeichnet, dass** an einem Ende der Hülle das flache Band (SB) aus faserigem Material in eine flächig aufgeweitete Form (EF) übergeht, deren Querabmessung ein Mehrfaches der Breite des Bandes beträgt.

10. Wassertransportleitung nach Anspruch 9, **dadurch gekennzeichnet, dass** die flächig aufgeweitete Form (EF) ein Keimsubstrat oder eine Unterlage für ein flächiges erdfreies Keimsubstrat bildet.

## Claims

1. Water transport line, which is formed for capillary irrigation in a plant irrigation device and which contains a flexible strand of fibrous material as medium for moving water also against gravity,
wherein the strand of fibrous material is surrounded at least over part of its length by a watertight cover,
**characterized in that**,
the strand of fibrous material is implemented as a flat strip (SB) and the cover (HU) defines an interior space with a flat cross-section, and
the strip (SB) comprises raised structures (PR) at least on one of its two opposing surfaces.

2. Water transport line according to claim 1, **characterized in that** the interior space of the cover (HU) is substantially completely filled by the fibrous material (SB) in the direction of its shortest extent in the cross section.

3. Water transport line according to claim 2, **characterized in that** the fibrous material (SB) bears against the interior wall of the cover by means of elastic deformation of the cover (HU) and/or of the fibrous material.

4. Water transport line according to any of claims 1 to 3, **characterized in that** the cover (HU) is realized with not-transparent material.

5. Water transport line according to any of claims 1 to 4, **characterized in that** the fibrous material (SB) is formed as non-woven fabric.

6. Water transport line according to any of claims 1 to 5, **characterized in that** the strip (SB) projects beyond the cover (HU) at least at one end (E2) by a length which is a multiple, in particular at least 5 times of the width of the strip.

7. Water transport line according to any of claims 1 to 6, **characterized in that** a stable ground spike is arranged at one end of the cover.

8. Water transport line according to claim 7, **characterized in that** the flat strip (E21 , E22) is uncovered on one side of the ground spike (SP) facing away from the cover.

9. Water transport line according to any of claims 1 to 6, **characterized in that** on one end of the cover the flat strip (SB) of fibrous material transitions in a flat-widened shape (EF), the transverse dimension of which is a multiple of the width of the strip.

10. Water transport line according to claim 9, **characterized in that** the flat-widened shape form (EF) forms a seed substrate or a support for a flat ground free seed substrate.

## Revendications

1. Ligne de transport d'eau, qui est formée pour l'irrigation capillaire dans un dispositif d'irrigation de plantes et qui contient un brin flexible de matériau fibreux comme milieu pour déplacer l'eau également contre la gravité,
dans lequel le brin de matériau fibreux est entouré au moins sur une partie de sa longueur par une housse étanche,
**caractérisé en ce que**,
le brin de matériau fibreux est implémenté en forme d'une bande plate (SB) et la housse (HU) définie un espace intérieur à section transversale plane, et
la bande (SB) comprend des structures surélevées (PR) au moins sur l'une de ses deux surfaces opposées.

2. Ligne de transport d'eau selon la revendication 1, **caractérisé en ce que** l'espace intérieur de la housse (HU) est rempli de manière sensiblement complète par le matériau fibreux (SB) dans la direction de son étendue la plus courte dans la section transversale.

3. Ligne de transport d'eau selon la revendication 2, **caractérisé en ce que** le matériau fibreux (SB) s'appuie contre la paroi intérieure de la housse du couvercle par déformation élastique de la housse (HU) et/ou du matériau fibreux.

4. Ligne de transport d'eau selon l'une quelconque des revendications 1 to 3, **caractérisé en ce que** la housse (HU) est réalisé avec un matériau non transparent.

5. Ligne de transport d'eau selon l'une quelconque des revendications 1 to 4, **caractérisé en ce que** le matériau fibreux (SB) st réalisé sous la forme d'un tissu non-tissé.

6. Ligne de transport d'eau selon l'une quelconque des revendications 1 to 5, **caractérisé en ce que** la bande (SB) fait saillie au-delà de la housse (HU) au moins à une extrémité (E2) d'une longueur multiple, en particulier d'au moins 5 fois, de la largeur de la bande.

7. Ligne de transport d'eau selon l'une quelconque des revendications 1 to 6, **caractérisé en ce que** une pointe de terrain stable est agencée à une extrémité de la housse.

8. Ligne de transport d'eau selon la revendication 7, **caractérisé en ce que** la bande plate (E21 , E22) est découverte d'un côté de la pointe de terrain (SP) opposé à la housse.

9. Ligne de transport d'eau selon l'une quelconque des revendications 1 to 6, **caractérisé en ce que** à une extrémité de la housse la bande plate (SB) de matériau fibreux se transforme en forme élargie (EF) dont la dimension transversale est multiple de la largeur de la bande.

10. Ligne de transport d'eau selon la revendication 9, **caractérisé en ce que** la forme élargie (EF) forme un substrat de semence ou un support pour un substrat de semence plat sans sol.
